# EUROPEAN PATENT SPECIFICATION

(11) **EP 2 038 032 B1**
(45) Date of publication and mention of the grant of the patent: **28.03.2018**
(21) Application number: 07809284.8
(22) Date of filing: 31.05.2007
(51) Int. Cl.: E01C 13/02

(54) **SAND TRAP WITH LINER ASSEMBLY**
GOLFBUNKER MIT AUSKLEIDUNG
FOSSE DE SABLE AVEC ENSEMBLE DE REVÊTEMENT

(30) Priority: 31.05.2006 US 809564 P; 30.05.2007 US 807690
(43) Date of publication of application: 25.03.2009
(73) Proprietor: KLC Concepts LLC, Dallas, TX 75230 (US)
(72) Inventor: CLARK, Kevin, L., Denton, TX 76210 (US)
(74) Representative: Miller, James Lionel Woolverton
(86) International application number: PCT/US2007/013018
(87) International publication number: WO 2007/143137

(56) References cited:
- WO-A1-97/27368
- KR-Y1- 200 181 873
- US-A- 4 960 345
- US-A1- 2004 131 423
- US-A1- 2004 156 679

## Description

### BACKGROUND

Golf technology is advancing at a rapid pace. Equipment has improved, allowing players to hit golf balls farther than ever before, with greater accuracy. In an attempt to keep up with modern golf technology, new golf courses are being constructed and older courses are being renovated to enhance the level of difficulty. As a result of this effort, the number and size of sand traps have increased.

Unfortunately, sand traps require a substantial amount of maintenance and grooming. For example, because sand traps often are positioned near existing grasses, shrubs or other plantings, growth of these plantings can spread into the sand trap, which may be undesirable on certain types of golf courses. Additionally, sand traps can retain water from precipitation and/or irrigation, resulting in slow drainage and/or ponding of water within the sand trap. These types of conditions can result in frustrated golfers or even unplayable conditions, both of which can cause economic losses for golf course owners.

A known sand trap is shown in KR 200 181 873 Y.

### SUMMARY

The present invention is directed toward a sand trap with a liner assembly according to claim 1.

The present invention also includes a method for lining the cavity of a sand trap according to claim 9.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Figure 1 is a perspective view of a sand trap having features of the present invention;
Figure 2 is a perspective view of a portion of the sand trap;
Figure 3A is a cross-sectional view of the sand trap taken on line 3-3 in Figure 1, illustrating a first embodiment of a liner assembly having features of the present invention;
Figure 3B is a simplified close-up side view of a portion of one embodiment of a retainer layer of the liner assembly;
Figure 4 is a cross-sectional view of the sand trap including a second embodiment of the liner assembly;
Figure 5 is a cross-sectional view of the sand trap including an example of a liner assembly not in accordance with the present invention; and
Figure 6 is a cross-sectional view of the sand trap including another example of a liner assembly not in accordance with the present invention.

### DESCRIPTION

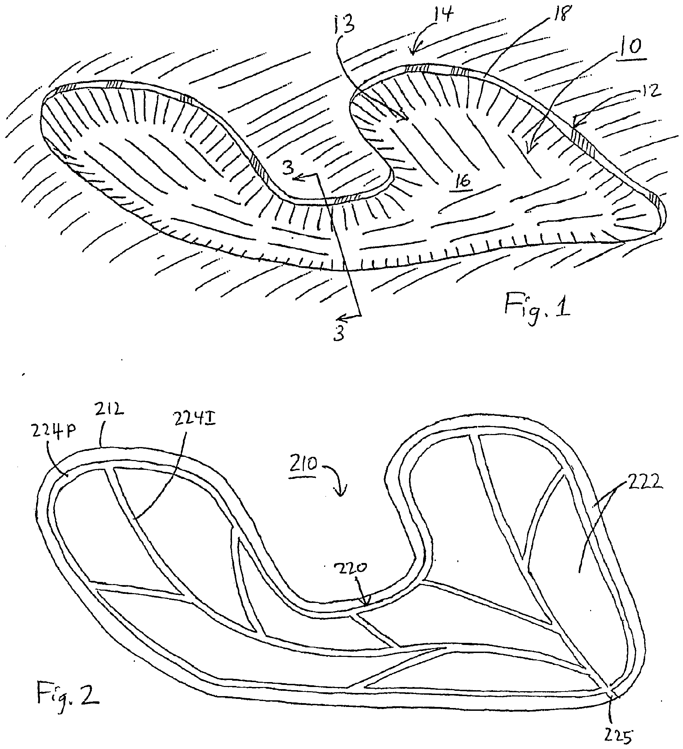

Figure 1 is a perspective view of a sand trap 10 having features of the present invention. The sand trap 10 described herein can be used on any type of golf course or any size public or private golf practice facility, as non-exclusive examples. The sand trap 10 illustrated in Figure 1 has a perimeter 12 that defines a cavity 13 of the sand trap 10, and can be cut into the ground surface 14. The perimeter 12 of the sand trap 10 defines the overall shape or configuration (also known as the footprint) of the sand trap 10. The footprint of the sand trap 10 illustrated in Figure 1 is merely one example of an infinite number of possible footprints known to those skilled in the art, and is shown as a representative example only.

In this example, the ground surface 14 can be grass or any other type of vegetation. Alternatively, the ground surface 14 can include soil, rock, or other types of non-vegetative materials. In this embodiment, because the sand trap 10 is cut into the ground surface 14, most or all of the sand trap 10 is positioned substantially at or below the level of the ground surface 14, although this is not a requirement.
The sand trap 10 also includes a filling material 16 (e.g., sand, quartz, crushed granite or other similar material, sometimes also referred to herein as "sand") and a base 18 that can be native material or imported material from another location. The base 18 can include one or more different types of soil, rock, and/or other suitable materials.

Figure 2 illustrates a schematic diagram of a portion of a sand trap 210 having features of the present invention. In this embodiment, the sand trap 210 includes the filling material 16 (illustrated in Figure 1), the base 18 (illustrated in Figure 1), a perimeter 212, a drainage system 220 and a liner assembly 222. In the embodiment illustrated in Figure 2, the filling material 16 has been omitted to show a portion of the drainage system 220 and a portion of the liner assembly 222. The drainage system 220 can include a plurality of interconnected drain lines that include a drain outlet 225, one or more interior drain lines 2241 and one or more perimeter drain lines 224P. It is recognized that the configuration of the drain lines 2241, 224P illustrated in Figure 2 is merely one example of a drainage network, and that an infinite number of possible configurations could be used that would satisfy the intent of the present invention.

In this embodiment, the perimeter drain line 224P is positioned substantially along or near the perimeter 212 of the sand trap 210. The interior drain lines 2241 are positioned more toward an interior of the sand trap 210, i.e. toward the middle area of the sand trap 210 and can extend inwardly from the perimeter 212, for example. Typically, the perimeter 212 of the sand trap 210 is configured to have the greatest degree of slope relative to a horizontal surface. The slope at the perimeter 212 normally induces irrigation water or precipitation to travel downward toward the interior, lesser sloped areas of the sand trap 210, where water can migrate and/or percolate, resulting in ponding. However, the perimeter drain line 224P, either alone or coupled with the liner assembly 222, can inhibit this water migration by causing the water to drain via the drainage system 220 more quickly than with conventional sand traps, as described more fully herein.

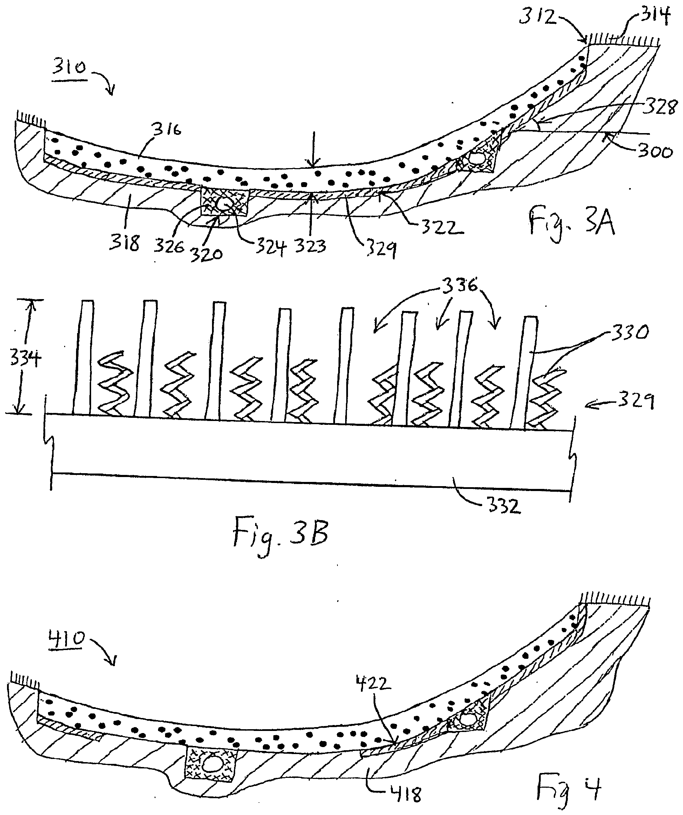

Figure 3A is a cross-sectional view of one embodiment of a sand trap 310 and a portion of the ground surface 314 taken on line 3-3 in Figure 1. In this embodiment, the sand trap 310 includes the filling material 316, the base 318, a drainage system 320 and a liner assembly 322. In one embodiment, the filling material 316 can have a relatively uniform depth 323 along the length and/or width of the sand trap 310. For example, the filling material 316 can have a uniform depth 323 of between approximately two and eighteen inches, although the depth 323 can be above or below this range. In an alternative embodiment, the depth 323 of the filling material 316 can vary within the sand trap 310.

The base 318 is the material at the bottom and/or sides of the sand trap 310. The base 318 supports, e.g. is positioned beneath, the liner assembly 322. In the embodiment illustrated in Figure 3A, the base 318 is in direct contact with the liner assembly 322. In an example not in accordance with the invention, the base 318 can be formed from any suitable material, including native or imported soils of any type, organic materials, different types of aggregate, various sizes and types of rock, or any other material that forms an appropriate base 318 for the remainder of the contents of the sand trap 310. According to the invention, the base 318 is formed by carving out or otherwise removing native ground material to form the cavity 13 (illustrated in Figure 1). In this embodiment, the base 318 is the material, i.e. soil, rock, etc., that remains following removal of material to form the cavity 13. In an alternative example not in accordance with the invention, known soil amendments, certain aggregates or other materials can be added to the cavity 13 to form the base 318 or combine with the native materials to form the base 318. In yet another example, material is built up to form the desired cavity 13 configuration. Further, the base 318 can be compacted to form a relatively solid base for the remaining materials, described below.

The drainage system 320 can include a network of one or more drain lines 324 that are typically used for landscape drainage. For example, the drain lines 324 can include perforated polyvinylchloride (PVC) pipe, with or without geofabric or some other type of sleeve surrounding the pipe. Alternatively, other suitable types of drain lines 324 or area drains can be utilized with the present invention. In one embodiment, the drain lines 324 can be at least partially surrounded by a drain surround 326 such as crushed or natural rock, sand, or other types of suitable natural or synthetic materials. In certain embodiments, the drain lines 324 can be connected to a drainage outlet 225 (illustrated in Figure 2), culvert or brow ditch (not shown) or to a sewer system (not shown) that carries the drained fluid away from the filling material 316 within the sand trap 310.

The design of the liner assembly 322 can be varied depending upon the design requirements of the sand trap 310. In certain embodiments, the liner assembly 322 can provide a base upon which at least a portion of the filling material 316 rests. Further, the liner assembly 322 can inhibit the filling material 316 from sliding to lower points within the sand trap 310. For example, on sloped areas of the sand trap 310, the liner assembly 322 provides a structure having sufficient frictional characteristics that allow the sand to resist the force of gravity, and thus, remain on sloped portions of the sand trap 310, such as near the perimeter 312 of the sand trap 310.

In the embodiment illustrated in Figure 3A, the liner assembly 322 extends substantially along the entire bottom and sides of the sand trap 310. In this embodiment, the liner assembly 322 is positioned adjacent to the base 318. Stated another way, the liner assembly 322 is substantially covered by the filling material 316 so that the liner assembly 322 is substantially unexposed and is therefore not visible to golfers. In the embodiment illustrated in Figure 3A, the majority of the liner assembly 322 is positioned directly or indirectly between the base 318 and the filling material 316.

Further, as described below, because of the materials used and the method of installation, the liner assembly 322 can be installed at various angles 328 that are significantly greater than zero degrees relative to the horizontal 300. In one embodiment, for example, the angle 328 of the liner assembly 322 can be at least approximately 45 degrees relative to the horizontal 300. In non-exclusive, alternative embodiments, the angle 328 of the liner assembly 322 can be at least approximately 1, 2, 5, 10, 15, 20, 30, 60 or 75 degrees relative to the horizontal 300. In further embodiments, the angle 328 of the liner assembly 322 can be approximately 90 degrees relative to the horizontal 300. With this design, as provided below, the liner assembly 322 can inhibit the sand 316 from sliding down to the lower portions of the sand trap 310 despite an increased angle (relative to the horizontal 300) of portions of the sand trap 310.

In certain embodiments, the liner assembly 322 includes a retainer layer 329 that retains and/or supports a portion of the filling material 316 and inhibits the filling material 316 from sliding downwardly within the sand trap 310. In the embodiment illustrated in Figure 3A, the retainer layer 329 is in direct contact with the base 318. In one embodiment, the retainer layer 329 can be at least partially formed from a synthetic material, e.g., plastic such as polyethylene and/or polypropylene, which can appear somewhat similar or identical to a synthetic turf material, artificial turf, artificial grass or a synthetic field turf (hereinafter generically referred to as "synthetic turf'). In an alternative embodiment, the synthetic material of the retainer layer 329 can be formed from other types of plastics or any other suitable materials consistent with the intention of the liner assembly 322 described herein. The retainer layer 329 can be water impermeable or water permeable to suit the requirements of the sand trap 310.

In another embodiment, the retainer layer 329 can also include a retainer layer substrate 332 (illustrated in Figure 3B), such as a geotextile fabric material, a rubberized mat or another suitable material that is adhered or otherwise secured to the synthetic material. Further, in one embodiment, the retainer layer substrate 332 of the retainer layer 329 can be sealed using a material that is substantially water impermeable or resistant to the penetration of liquids. With this design, ground water or other liquids are less likely to percolate into the filling material 316 from or through the base 318. Moreover, because liquid is inhibited from soaking through the liner assembly 322 from the filling material 316, the liner assembly 322 can direct or divert liquids such as precipitation and/or irrigation fluid directly or indirectly into the drainage system 320. Alternatively, the retainer layer substrate 332 can be water permeable to allow water or other liquids to move between the filling material 316 and the base 318, i.e. through the retainer layer 329.

During construction, any seams of the liner assembly 322 can be adhered together using a geotextile fabric with an adhesive material applied to the fabric to reduce the likelihood of breaches in the liner assembly 322.

In addition to the above, the liner assembly 322 can inhibit growth of plants, shrubs, bushes, grass or other vegetation within the sand trap 310. Further, the liner assembly 322 can preserve the integrity of the filling material 316 and/or inhibit infusion and migration of the base 318 into the filling material 316. In addition, or in the alternative, the liner assembly 322 can direct and/or divert water to the drainage system 320 to more quickly evacuate water from the sand trap 310.

Figure 3B is a close-up side view of a portion of one embodiment of the retainer layer 329. In this embodiment, the retainer layer includes a plurality of spaced-apart projections 330 and a retainer layer substrate 332. The projections 330 are secured to and extend from the retainer layer substrate 332. In one embodiment, the projections 330 can approximate blades of grass or turf in size and/or shape. Alternatively, the projections 330 can have a somewhat different size and shape than blades of grass or turf. In non-exclusive alternative embodiments, the projections 330 can be substantially cylindrical, conical, frustoconical, spiral or pyramidal. Still alternatively, the projections 330 can have any other suitable configuration.

The projections 330 can each have a height 334 of approximately 1 to 5 cm. Alternatively, the height 334 of the projections 330 can be greater or less than this range of heights 334. Further, the projections 330 within a given retainer layer 329 can be substantially uniform in height 334. Alternatively, the height 334 of the projections 330 can vary within a particular retainer layer 329. In one embodiment, the height 334 of the projections 330 varies depending upon the positioning of the retainer layer 329 within the sand trap 310 (illustrated in Figure 3A), including the angle of the retainer layer 329 relative to the horizontal 300 (illustrated in Figure 3A), proximity to the perimeter 312 (illustrated in Figure 3A), or other relevant factors that might require a greater or lesser height 334.

In an alternative embodiment, the retainer layer 329 can intersperse projections 330 having disparate heights 334. Alternatively, or in addition, the retainer layer 329 can include two or more different shapes for the projections 330. In the embodiment illustrated in Figure 3B, the retainer layer 329 includes a plurality of spiral shaped projections 330 interspersed with or separated from a plurality of cylindrical projections 330. By utilizing different shaped and/or sized projections 330, one projection 330 having a first shape can support another projection 330 having a different shape so that the projections 330 are inhibited from laying flat, which would decrease the ability of the retainer layer 329 to support the filling material 316 (illustrated in Figure 3A) in angled regions of the sand trap 310. The shapes of the projections 330 identified in this example are provided for ease of understanding only, and are not intended to limit the scope of the shapes of projections 330 that can be used in the retainer layer 329.

Additionally, some non-exclusive embodiments of the retainer layer 329 include fibrillated or non-fibrillated products which may be texturized or nontexturized. In certain embodiments, by including projections 330 that extend in an upwardly or outwardly direction relative to the base 318 (illustrated in Figure 3A) of the sand trap 310, for example, a portion of the filling material 316 can be positioned in the spaces 336 or gaps between the projections 330 of the retainer layer 329, thereby resisting undue gravitational movement of the filling material 316, even on relatively steep sections of the sand trap 310.

In another embodiment, the projections 330 can be coated with an adhesive material (not shown) that can promote adherence of the filling material 316 to the retainer layer 329. With the designs provided herein, the retainer layer 329 remains covered by the filling material 316 so that the retainer layer 329 is unexposed to sunlight and other elements, and is not visible to the golfers.

Figure 4 illustrates a cross-sectional view of another embodiment of a portion of the sand trap 410. In this embodiment, the liner assembly 422 is positioned directly on the base 418, but only covers a portion of the base within the sand trap 410. With this design, the cost of the materials forming the liner assembly 422 can be reduced because fewer square feet of these materials are being utilized within a given sand trap 410. Stated another way, the ratio of square footage of the sand trap 410 to the square footage of the liner assembly 422 is greater than 1:1. In non-exclusive alternative embodiments, the ratio of the square footage of the sand trap 410 to the square footage of the liner assembly 422 is at least approximately 2:1, 3:1, 4:1, 5:1, 10:1, 20:1, 50:1 or 100:1.

In another embodiment, the extent to which the liner assembly 422 covers the surface area of the base 418 can vary. For example, in one embodiment, the liner assembly 422 covers at least approximately 2% of the surface area of the base 418. In non-exclusive, alternative embodiments, the liner assembly 422 covers at least approximately 5%, 10%, 25%, 50%, 75% or 90% (or 100% as illustrated in Figure 3A) of the surface area of the base 418.

In one embodiment, the liner assembly 422 is positioned where it is most needed, e.g., at or near the steepest areas of the sand trap 410. In certain non-exclusive embodiments, the liner assembly 422 is positioned wherever the grade of the sand trap exceeds approximately 1%, 2%, 5%, 10%, 20%, 30%, 45%, 60% or 75%. In another embodiment, the liner assembly 422 is positioned at and/or near the perimeter 412 of the cavity 13 (illustrated in Figure 1) of the sand trap 410. In one specific embodiment, the liner assembly 422 is positioned in an area that is within approximately two feet or less of the perimeter 412 of the cavity 13. Alternatively or in addition, the liner assembly 422 can alternatively be positioned in an area that is farther away than two feet from the perimeter 412.

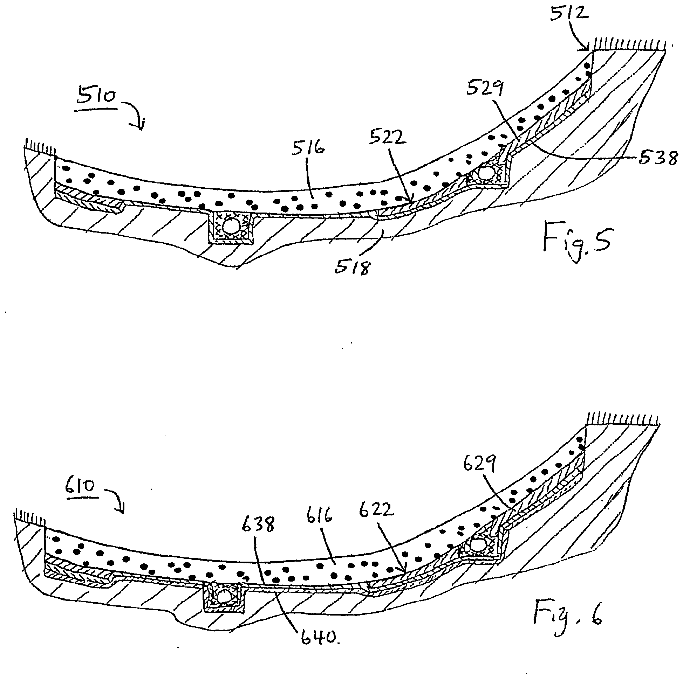

Figure 5 illustrates a cross-sectional view of an example of a portion of the sand trap 510. In this example, the liner assembly 522 includes a retainer layer 529 and a first support layer 538. The first support layer 538 is formed at least partially from a water-permeable fabric material. The first support layer 538 can be formed from or can include a geosynthetic material such as a geotextile or any other suitable material that resists biological degradation, for example. Alternatively, the first support layer 538 can be formed using another type of material that does not resist biological degradation, as appropriate.

One representative material that can be used for the first support layer 538 includes Mirafi® Filterweave® 404. However, numerous somewhat similar water-permeable materials can be used for the first support layer 538 of the liner assembly 522. In certain examples, the first support layer 538 can be positioned on the base 518 and pinned, stapled, adhered or otherwise held in place on the base 518 within the cavity 13 (illustrated in Figure 1) of the sand trap 510. Alternatively, the first support layer 538 is simply laid into the cavity 13 without using any type of fastener to hold the first support layer 538 in place.

Although the retainer layer 529 illustrated in Figure 5 does not cover the entire cavity 13 of the sand trap 510 and is positioned only near the perimeter 512 of the sand trap 510, i.e. only supports a portion of the filling material 516, it is understood that the retainer layer 529 could equally be positioned in a continuous manner within the cavity 13 of the sand trap 510 and/or in areas that are away from the perimeter 512.

Figure 6 illustrates a cross-sectional view of another example of a portion of the sand trap 610. In this example, the liner assembly 622 includes a retainer layer 629, a first support layer 638 and a second support layer 640. In accordance with one example of the liner assembly 622, the second support layer 640 is formed from a substantially water-impermeable material that is secured to the first support layer 638 so that the first support layer 638 is positioned between the base 618 and the second support layer 640. In an alternative example (not shown), the second support layer 640 is indirectly secured to the first support layer 638 so that one or more additional layers (not shown) can be positioned directly between the first support layer 638 and the second support layer 640.

In one example, the second support layer 640 can be seamlessly applied as a liquid to the first support layer 638. For instance, the second support layer 640 can be sprayed onto the first support layer 638 using a compression spray apparatus or other similar type of spraying apparatus, a brush or roller, or by being poured or cast in place, as non-exclusive examples. In this manner, the second support layer 640 can adhere to the first support layer 638 upon curing of the second support layer 640 to form a seamless liner assembly 622. Stated another way, the first support layer 638 can act as a base layer to which the second support layer 640 can adequately bond. A more thorough discussion of the first layer and the second layer can be found in copending U.S. Patent Application entitled "MULTI-LAYER LINER ASSEMBLY FOR A SAND TRAP", filed by Kevin L. Clark, having United States Patent Application Serial No. 11/188,938 and publication number US 2007/020048 A. It is further noted that although the retainer layer 629 illustrated in Figure 6 does not cover the entire cavity 13 (illustrated in Figure 1) of the sand trap 610 and is positioned only near the perimeter 612 of the sand trap 610, i.e. only supports a portion of the filling material 616, it is understood that the retainer layer 629 could equally be positioned in a continuous manner within the cavity 13 of the sand trap 610 and/or in areas that are away from the perimeter 612.

While the particular sand trap 10 and liner assembly 222 as shown and disclosed herein are fully capable of obtaining the objects and providing the advantages herein before stated, it is to be understood that they are merely illustrative of the presently preferred embodiments of the invention and that no limitations are intended to the details of the methods, construction or design herein shown and described.

## Claims

1. A sand trap (310) with a liner assembly (322), the sand trap (310) including a cavity (13) having a perimeter (312), a base (318) including at least native ground material within the cavity (13) and an exposed filling material (316) positioned within the cavity (13), the liner assembly (322) comprising:
a retainer layer (329) that is positioned between the base (318) and the filling material (316), the retainer layer (329) being covered by the filling material (316) so that the retainer layer (329) is substantially unexposed, the retainer layer (329) including a plurality of spaced apart projections (330), wherein the filling material (316) at least partially fills the spaces between the projections (330),
the liner assembly (322) being **characterized in that** the retainer layer (329) further comprises a retainer layer substrate (332) that supports the projections (330), the retainer layer substrate (332) directly contacting the native ground material of the base (318).

2. The sand trap (310) of claim 1 wherein the retainer layer (329) is substantially water impermeable to inhibit movement of water between the base (318) and the filling material (316).

3. The sand trap (310) of claim 1 wherein the retainer layer (329) is water permeable to permit movement of water between the base (318) and the filling material (316).

4. The sand trap (310) of claim 1 wherein the base (318) has a base surface area, and the retainer layer (329) covers a majority of the base surface area.

5. The sand trap (310) of claim 1 wherein the retainer layer (329) is formed at least partially from a synthetic turf material.

6. The sand trap (310) of claim 1 wherein at least a portion of the retainer layer (329) is positioned near the perimeter (312) of the cavity (13).

7. The sand trap (310) of claim 1 wherein the filling material (316) is sand.

8. The sand trap (310) of claim 1 wherein at least a portion of the retainer layer (329) is positioned within the cavity (13) at an angle that is at least 10 degrees relative to the horizontal.

9. A method for lining a cavity (13) of a sand trap (310), the method comprising the steps of:
providing a retainer layer (329) having a plurality of spaced-apart, substantially upright projections (330); and
positioning at least a portion of the retainer layer (329) between a base (318) of the cavity (13) and an exposed filling material (316) so that the retainer layer (329) is substantially covered by the filling material (316), the base (318) including at least native ground material, the filling material (316) at least partially filling a space between the plurality of projections (330),
the method being **characterized by** the retainer layer (329) being positioned in direct contact with the native ground material.

10. The method of claim 9 wherein the step of providing includes the plurality of substantially upright projections (330) being formed from a plastic material.

11. The method of claim 9 wherein the step of providing includes forming the retainer layer (329) at least partially from synthetic turf.

12. The method of claim 9 wherein the step of positioning includes positioning at least a portion of the retainer layer (329) near a perimeter (312) of the cavity (13).

13. The method of claim 9 wherein the step of positioning includes the filling material (316) being sand.

## Patentansprüche

1. Golfbunker (310) mit einer Auskleidungsanordnung (322), der Golfbunker (310) umfassend eine Vertiefung (13) mit einem Umfang (312), eine Basis (318), umfassend zumindest heimisches Bodenmaterial innerhalb der Vertiefung (13) und ein freiliegendes Füllmaterial (316), das innerhalb der Vertiefung (13) positioniert ist, die Auskleidungsanordnung (322) umfassend:
eine Rückhalteschicht (329), die zwischen der Basis (318) und dem Füllmaterial (316) positioniert ist, wobei die Rückhalteschicht (329) von dem Füllmaterial (316) bedeckt ist, so dass die Rückhalteschicht (329) im Wesentlichen nicht freiliegend ist, wobei die Rückhalteschicht (329) mehrere beabstandete Überstände (330) umfasst, wobei das Füllmaterial (316) die Räume zwischen den Überständen (330) zumindest teilweise ausfüllt,
wobei die Auskleidungsanordnung (322) **dadurch gekennzeichnet ist, dass** die Rückhalteschicht (329) ferner ein Rückhalteschichtsubstrat (332) umfasst, das die Überstände (330) trägt, wobei das Rückhalteschichtsubstrat (332) mit dem heimischen Bodenmaterial der Basis (318) direkt in Kontakt kommt.

2. Golfbunker (310) nach Anspruch 1, wobei die Rückhalteschicht (329) im Wesentlichen wasserundurchlässig ist, um eine Bewegung von Wasser zwischen der Basis (318) und dem Füllmaterial (316) zu hemmen.

3. Golfbunker (310) nach Anspruch 1, wobei die Rückhalteschicht (329) wasserdurchlässig ist, um eine Bewegung von Wasser zwischen der Basis (318) und dem Füllmaterial (316) zu erlauben.

4. Golfbunker (310) nach Anspruch 1, wobei die Basis (318) eine Basisfläche aufweist und die Rückhalteschicht (329) einen Großteil der Basisfläche bedeckt.

5. Golfbunker (310) nach Anspruch 1, wobei die Rückhalteschicht (329) zumindest teilweise aus einem Kunstrasenmaterial gebildet ist.

6. Golfbunker (310) nach Anspruch 1, wobei zumindest ein Abschnitt der Rückhalteschicht (329) in der Nähe des Umfangs (312) der Vertiefung (13) positioniert ist.

7. Golfbunker (310) nach Anspruch 1, wobei das Füllmaterial (316) Sand ist.

8. Golfbunker (310) nach Anspruch 1, wobei zumindest ein Abschnitt der Rückhalteschicht (329) innerhalb der Vertiefung (13) mit einem Winkel positioniert ist, der mindestens 10 Grad bezogen auf die Horizontale beträgt.

9. Verfahren zum Auskleiden einer Vertiefung (13) eines Golfbunkers (310), das Verfahren umfassend die folgenden Schritte:
Bereitstellen einer Rückhalteschicht (329) mit mehreren beabstandeten, im Wesentlichen aufrechten Überständen (330); und
Positionieren zumindest eines Abschnitts der Rückhalteschicht (329) zwischen einer Basis (318) der Vertiefung (13) und einem freiliegenden Füllmaterial (316), so dass die Rückhalteschicht (329) im Wesentlichen von dem Füllmaterial (316) bedeckt ist, die Basis (318) umfassend zumindest heimisches Bodenmaterial, wobei das Füllmaterial (316) einen Raum zwischen den mehreren Überständen (330) zumindest teilweise ausfüllt,
wobei das Verfahren **dadurch gekennzeichnet ist, dass** die Rückhalteschicht (329) in direktem Kontakt mit dem heimischen Bodenmaterial positioniert ist.

10. Verfahren nach Anspruch 9, wobei der Schritt des Bereitstellens umfasst, dass die mehreren im Wesentlichen aufrechten Überstände (330) aus einem Kunststoffmaterial gebildet sind.

11. Verfahren nach Anspruch 9, wobei der Schritt des Bereitstellens das Bilden der Rückhalteschicht (329) zumindest teilweise aus Kunstrasen umfasst.

12. Verfahren nach Anspruch 9, wobei der Schritt des Positionierens das Positionieren zumindest eines Abschnitts der Rückhalteschicht (329) in der Nähe eines Umfangs (312) der Vertiefung (13) umfasst.

13. Verfahren nach Anspruch 9, wobei der Schritt des Positionierens umfasst, dass das Füllmaterial (316) Sand ist.

## Revendications

1. Fosse de sable (310) avec ensemble revêtement (322), la fosse de sable (310) comprenant une cavité (13) ayant un périmètre (312), une base (318) comprenant au moins un matériau de sol natif dans la cavité (13), et un matériau de remplissage exposé (316) placé dans la cavité (13), l'ensemble revêtement (322) comprenant :
une couche de retenue (329) placée entre la base (318) et le matériau de remplissage (316), la couche de retenue (329) étant couverte par le matériau de remplissage (316) de sorte que la couche de retenue (329) soit sensiblement non exposée, la couche de retenue (329) comprenant une pluralité de protubérances espacées (330), le matériau de remplissage (316) remplissant au moins en partie les espaces entre les protubérances (330),
l'ensemble revêtement (322) étant **caractérisé en ce que** la couche de retenue (329) comprend en outre un substrat de couche de retenue (332) qui supporte les protubérances (330), le substrat de couche de retenue (332) étant directement en contact avec le matériau de sol natif de la base (318).

2. Fosse de sable (310) selon la revendication 1, dans laquelle la couche de retenue (329) est sensiblement imperméable à l'eau pour empêcher un mouvement de l'eau entre la base (318) et le matériau de remplissage (316).

3. Fosse de sable (310) selon la revendication 1, dans laquelle la couche de retenue (329) est perméable à l'eau pour permettre un mouvement de l'eau entre la base (318) et le matériau de remplissage (316).

4. Fosse de sable (310) selon la revendication 1, dans laquelle la base (318) a une superficie de base, et la couche de retenue (329) couvre une majeure partie de la superficie de base.

5. Fosse de sable (310) selon la revendication 1, dans laquelle la couche de retenue (329) est formée au moins en partie à partir d'un matériau de tourbe synthétique.

6. Fosse de sable (310) selon la revendication 1, dans laquelle au moins une partie de la couche de retenue (329) est placée à proximité du périmètre (312) de la cavité (13).

7. Fosse de sable (310) selon la revendication 1, dans laquelle le matériau de remplissage (316) est du sable.

8. Fosse de sable (310) selon la revendication 1, dans laquelle au moins une partie de la couche de retenue (329) est placée dans la cavité (13) avec un angle d'au moins 10 degrés par rapport à l'horizontale.

9. Procédé de revêtement d'une cavité (13) d'une fosse de sable (310), le procédé comprenant les étapes consistant à :
fournir une couche de retenue (329) ayant une pluralité de protubérances espacées sensiblement verticales (330) ; et
placer au moins une partie de la couche de retenue (329) entre une base (318) de la cavité (13) et un matériau de remplissage exposé (316) de sorte que la couche de retenue (329) soit sensiblement couverte par le matériau de remplissage (316), la base (318) comprenant au moins un matériau de sol natif, le matériau de remplissage (316) remplissant au moins en partie un espace entre la pluralité de protubérances (330),
le procédé étant **caractérisé en ce que** la couche de retenue (329) est positionnée en contact direct avec le matériau de sol natif.

10. Procédé selon la revendication 9, dans lequel les protubérances sensiblement verticales (330) intervenant à l'étape de fourniture sont formées à partir d'un matériau plastique.

11. Procédé selon la revendication 9, dans lequel l'étape de fourniture consiste à former la couche de retenue (329) au moins en partie à partir de tourbe synthétique.

12. Procédé selon la revendication 9, dans lequel l'étape de placement consiste à placer au moins une partie de la couche de retenue (329) à proximité d'un périmètre (312) de la cavité (13).

13. Procédé selon la revendication 9, dans lequel le matériau de remplissage (316) utilisé à l'étape de placement est du sable.
